## Europäisches Patentamt

## European Patent Office

## Office européen des brevets

(11) Veröffentlichungsnummer: **0 118 811**
**B1**

(12) # EUROPÄISCHE PATENTSCHRIFT

(45) Veröffentlichungstag der Patentschrift:
**13.01.88**

(51) Int. Cl.⁴: **F 24 F 3/16,** F 24 F 6/16

(21) Anmeldenummer: **84101843.5**

(22) Anmeldetag: **22.02.84**

(54) **Vorrichtung zur Reinigung und/oder Befeuchtung von Luft oder Gasen.**

(30) Priorität: **12.03.83 DE 3308871**

(43) Veröffentlichungstag der Anmeldung:
**19.09.84 Patentblatt 84/38**

(45) Bekanntmachung des Hinweises auf die Patenterteilung:
**13.01.88 Patentblatt 88/2**

(84) Benannte Vertragsstaaten:
**AT BE CH FR GB IT LI LU NL SE**

(56) Entgegenhaltungen:
**CH-A-477 656**
**FR-A-1 452 040**
**US-A-3 189 328**
**US-A-3 190 624**

(73) Patentinhaber: **Biocomfort Produkte zur Gesundheitspflege GmbH, Hauptstrasse 18, D-7300 Esslingen (DE)**

(72) Erfinder: **Hitzler, Alfred, Uhlandstrasse, D-7984 Mochenwangen (DE)**

(74) Vertreter: **Magenbauer, Rudolf, Dipl.- Ing., Patentanwälte Dipl.- Ing. Rudolf Magenbauer Dipl.- Phys. Dr. Otto Reimold Hölderlinweg 58, D-7300 Esslingen (DE)**

**Beschreibung**

Die Erfindung betrifft eine Vorrichtung zur Reinigung und/oder Befeuchtung von Luft oder Gasen mit in einem Gehäuse angeordneten, zum Teil in einer Flüssigkeit rotierenden und von dieser benetzten Platten zur Aufnahme von Schadstoffen und/oder Abgabe von Flüssigkeit und mit einem kombinierten Antrieb für einen Ventilatorflügel und die Platten, mit einem in dem Gehäuse enthaltenen Motor, auf dessen Welle der Ventilator sitzt und die zugleich ein Getriebeelement eines untersetzten, unmittelbar auf dem Plattenstapel einwirkenden Reibradantriebs trägt.

Es sind schon Geräte zur Luftreinigung aus mehreren Druckschriften (DE-C-503 761, DE-U-1 940 255; DE-A-1 778 268; DE-A-2 005 852) bekannt, bei denen ein Plattenstapel in einer Flüssigkeit rotiert und die zu befeuchtende oder zu reinigende Luft an dem nicht eingetauchten Teil der Platten vorbeigeführt wird. Die langsam rotierenden Scheiben werden ständig benetzt, so daß sowohl eine Luftbefeuchtung als auch eine Luftreinigung durch Adsorption stattfinden kann. Diese bekannten Einrichtungen haben jedoch den Nachteil, daß sie zu kompliziert aufgebaut sind und insbesondere in der Handhabung umständlich zu bedienen sind.

In der FR-A-1 452 040 ist ein Luftbefeuchter beschrieben und dargestellt, der in einem offensichtlich einteiligen, geschlossenen Gehäuse z. B. aus Blech einen Motor aufweist, der gleichzeitig den Lüfter für den Lufttransport und die Reinigungsscheiben antreibt. Die Montage und das Auseinanderbauen eines solchen Gerätes zu Wartungs- bzw. Reinigungszwecken ist jedoch umständlich und kompliziert. Dieser Nachteil trifft auch für die Anordnung nach der CH-A-477 656 zu, bei der ein das Reinigungsbad enthaltendes Gefäß in einem Luftkanal eingebaut ist, an dem auch die Reinigungsscheiben gelagert sind, während der zu ihrem Antrieb dienende Motor, ausserhalb des Gehäuses vorgesehen ist. Das Gerät besitzt unmittelbar keinen Ventilator, als mehr oder weniger stationäre Anordnung fehlts auch an der nötigen Kompaktheit.

Der vorliegenden Erfindung liegt demgegenüber die Aufgabe zugrunde, eine Vorrichtung der eingangs bezeichneten Art zu schaffen, die kompakt und besonders platzsparend aufgebaut ist und guten Wirkungsgrad besitzt, den höchsten Sicherheitsanforderungen gerecht wird und eine besonders einfache Handhabung im täglichen Gebrauch, bei der Montage und Demontage und bei der Reinigung und der Wartung ermöglicht.

Die obige Aufgabe wird ausgehend von einer Vorrichtung der eingangs erwähnten Art dadurch gelöst, daß das Gehäuse aus zwei lösbar miteinander verbundenen Gehäuseteilen - einem unteren und einem oberen Gehäuseteil - zusammengesetzt ist, daß die Platten in wenigstens zwei sich überlappenden Plattenstapeln zusammengefaßt und in dem unteren Gehäuseteil angeordnet sind, daß das obere Gehäuseteil von dem unteren Gehäuseteil abnehmbar ist und daß der Motor abgekapselt im oberen Gehäuseteil angeordnet ist, das auch den Reibradantrieb für die Platten enthält.

Die erfindungsgemäße Anordnung hat gegenüber den bekannten Anordnungen den Vorteil, daß die Handhabung der erfindungsgemäßen Vorrichtung verbessert wurde. Um bei bekannten Geräten die Reinigungs- und Benetzungsflüssigkeit auszuwechseln, was von Zeit zu Zeit geschehen muß, muß das komplette Gerät z. B. an ein Waschbecken transportiert werden. Da die elektrischen Anschlüsse, der elektrische Motorantrieb für die Platten sowie zum Teil auch der Lüfterantrieb im unteren Teil des Gehäuses angeordnet sind, müssen bei der Auswechslung der Flüssigkeit höchste Sorgfalt angewandt und Sicherheitsvorkehrungen beachtet werden. Demgegenüber sind beim erfindungsgemäßen Gerät im unteren Teil der Vorrichtung ausschließlich die Flüssigkeit und der oder die Plattenstapel angeordnet. Sämtliche übrigen Vorrichtungsbestandteile sind im Deckel, bzw. oberen Teil des Gehäuses untergebracht. Zur Wartung und Reinigung des Geräts braucht deshalb dieses nur ausgeschaltet, der Deckel abgehoben und an Ort und Stelle beiseite gelegt werden. Mit dem Unterteil kann man dann bequem und gefahrenlos den Reinigungsvorgang bzw. Wartungsvorgang durchführen. Dabei sieht die Erfindung insbesondere vor, daß der kombinierte Antrieb für den Lüfter und für den Plattenstapel möglichst platzsparend untergebracht ist. Der Antrieb des Plattenstapels mittels Reibrad hat den Vorteil, daß beim Zusammenbau das Oberteil der Vorrichtung nunmehr lediglich auf das Unterteil aufgesetzt werden muß, um das Reibrad mit den Platten in Eingriff zu bringen. Besonders einfach ist die Ausführungsform dann, wenn die Antriebswelle des Motors ein Schneckenrad trägt, das mit einem Zahnrad des Reibradantriebs für den Plattenstapel in Eingriff steht. Diese Ausführungsform kann baulich sehr platzsparend und kostengünstig ausgeführt werden und es kann anstelle eines Getriebemotors ein einfacher Motor verwendet werden.

Vorteilhaft ist weiterhin, daß die Plattenstapel sich überlappend nebeneinander angeordnet sind und daß jedem Plattenstapel eine Reibradrolle zum Antrieb zugeordnet ist, die vom gemeinsamen Motor oder Getriebemotor für den Ventilator und Reibradantrieb antreibbar ist, oder daß weitere Plattenstapel untereinander antreibbar sind. Diese Maßnahme reiht sich in den übrigen Maßnahmen zur Herstellung einer platzsparenden Konstruktion ein.

In Ausgestaltung der Erfindung ist vorgesehen, daß im unteren Teil des Gehäuses zwei oder mehr Plattenstapel angeordnet sind, die jeweils über einen Reibradantrieb order über einen Reibradantrieb und untereinander vom gemeinsamen Getriebemotor antreibbar sind. Die Erfindung hat sich zum Ziel gesetzt, eine möglichst platzsparende und leicht zu handhabende Vorrichtung zu schaffen. In diesem Zusammenhang ist es von Vorteil, an Stelle von einem Plattenstapel mit vielen großen Platten, d.h. Platten mit großer Oberfläche mehrere kleine Plattenstapel mit kleinerer Oberfläche zu verwenden und diese nebeneinander inzuordnen. Hierdurch kann das Gerät niedriger und kompakter ausgeführt werden. Dabei können die Plattenstapel über Zahnräder und/oder über Riemen od.dgl. auch untereinander angetrieben werden.

Da der komplette Antrieb sowie die sonstigen Luftführungseinrichtungen im Oberteil der Vorrichtung angeordnet sind, liegen die Plattenstapel lose in Führungen im Unterteil des Gehäuses und können leicht herausgenommen werden. Die Reinigung bzw. die Wartung der erfindungsgemäßen Einrichtung, d.h. insbesondere der Flüssigkeitswechsel und die Reinigung des Flüssigkeitsbehälters läßt sich besonders einfach durchführen.

Vorteilhaft ist weiterhin, daß die Plattenstapel sich überlappend nebeneinander angeordnet sind und daß jedem Plattenstapel eine Reibradrolle zum Antrieb zugeordnet ist, die vom gemeinsamen Motor oder Getriebemotor für den Ventilator und Reibradantrieb antreibbar ist oder daß weitere Plattenstapel untereinander antreibbar sind. Diese Maßnahme reiht sich in den übrigen Maßnahmen zur Herstellung einer platzsparenden Konstruktion ein.

Weitere vorteilhafte und zweckmäßige Ausgestaltungen der Erfindung sind in der nachfolgenden Beschreibung insbesondere eines Ausführungsbeispiels näher erläutert und in der Zeichnung dargestellt. Es zeigen:

Fig. 1 eine Seitenansicht der erfindungsgemäßen Einrichtung und

Fig. 2 eine Draufsicht durch einen symmetrischen Schnitt durch einen Plattenstapel.

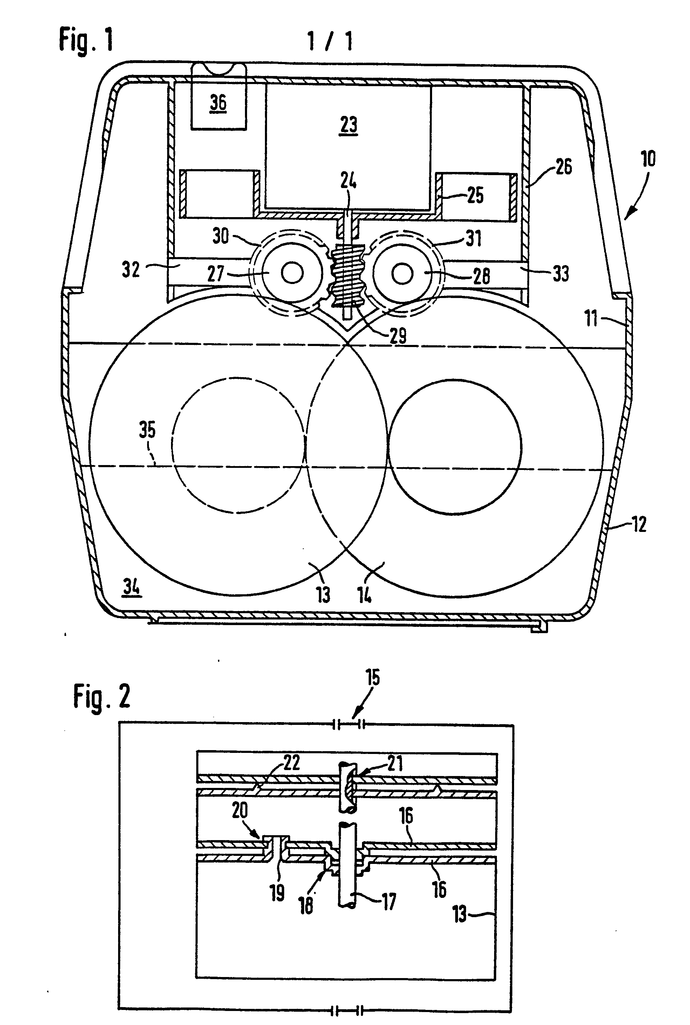

In Fig. 1 und 2 sind in einem Gehäuse 10, welches aus dem Oberteil 11 und dem Unterteil 12 besteht, zwei Plattenstapel 13, 14 mittels Lager 15 gelagert. Die Plattenstapel 13, 14 bestehen aus einer Vielzahl dicht nebeneinander angeordneter Einzelplatten 16, die auf einer Achse 17 nebeneinander aufgereiht sind. In Fig. 2 sind dabei zwei verschiedene Möglichkeiten der Plattenaufreihung dargestellt. In der einen Lösung ist die Platte 16 im Bereich der Plattenachse 17 stufenförmig 18 ausgebildet, wobei die Stufen der einzelnen Platten beim Zusammenfügen ineinander greifen und einen Abstand bilden. Zusätzlich weist jede Platte einen eingeprägten Abstandsnoppen 19 auf, der in eine entsprechende Bohrung 20 der nächsten Platte eingreift. Bei den zusammengefügten Platten 16 zu einem Plattenstapel 13, 14 ist dieser Verbindungsmechanismus 19, 20 auf einem Kreis angeordnet.

Als Alternative können die Platten 16 in einer Nut 21 der Plattenachse gehalten werden.

Zusätzliche Noppen 22 dienen als Abstandshalter.

Die aus Kunststoff hergestellten Platten (Material: PS, ABS, PS) sind ca. 1 mm dick und weisen einen Durchmesser von ca. 150 mm auf. Die Platten 16 werden in einem Abstand von ca. 4 mm stehend nebeneinander angeordnet, so daß z. B. 10 Platten eine Länge von ca. 7 cm bilden.

In Fig. 1 ist weiterhin der erfindungsgemäße Antrieb dargestellt. Ein in einem abgekapselten Gehäuse angeordneter Motor 23 ist an der Unterseite des Gehäuseoberteils 11 befestigt. Auf die in der Fig. 1 nach unten gerichtete Antriebsachse 24 ist ein Ventilstorflügel 25 aufgesetzt, der zur Ansaugung der Außenluft dient. Hierzu sind zur besseren Luftführung Luftleitbleche 26 vorgesehen.

Der Antrieb der Plattenstapel 13, 14 geschieht mittels eines Reibradantriebs über die Gummirollen 27, 28, die auf den Plattenstapeln 13, 14 aufliegen und diese in eine Drehbewegung versetzen. Dabei kann die Lagerung der Gummirollen 27, 28 durch in vertikale Richtung nachgiebige Lager ausgestaltet sein. Die Gummirollen 27, 28 besitzen eine Weichgummioberfläche, die mehrere Platten überdeckt, so daß ein sicherer Antrieb des Plattenstapels gewährleistet ist.

Der Antrieb der Gummirollen 27, 28 geschieht im Ausführungsbeispiel gem. Fig. 1 über ein Schneckengetriebe, bestehend aus einem Schneckenrad 29, welches auf der Achse 24 des Motors 23 angeordnet ist, und mit diesem Schneckenrad entsprechend in Eingriff stehenden Zahnrädern 30, 31, die auf den Achsen der Gummirollen 27, 28 und mit diesen fest verbunden sitzen. Die Lagerung der Zahnräder und der Gummirollen ist durch die Lagerarme 32, 33 schematisch angedeutet.

Die Plattenpakete 13, 14 tauchen in eine Reaktionsflüssigkeit 34 zum Teil ein. Die Flüssigkeitsoberfläche ist mit 35 schematisch dargestellt. Durch Drehung der Plattenpakete ist der nicht eingetauchte Oberflächenbereich der Platten mit Reaktionsflüssigkeit benetzt. Die vom Ventilator 25 angesaugte Luft wird an der benetzten Oberfläche der Platten 13, 14 vorbeigeführt, wobei schädliche Gase von der Flüssigkeit aufgenommen werden. Die gereinigte und befeuchtete Luft wird dann durch nicht näher dargestellte Schlitze im Oberteil des Gehäuses wieder nach außen geleitet. Durch Drehung des Plattenpakets wird die benetzte Oberfläche am nicht eingetauchten Teil des Plattenstapels ständig erneuert und aufgefrischt, so daß sich der größtmöglichste Gradient zwischen Anteil der Schadstoffe in der zu reinigenden Luft und Anteil dieser Schadstoffe in der benetzten Oberfläche des Plattenstapels ergibt. Dieser große Gradient ist maßgebend für einen optimalen Stoffaustausch, d.h. für eine optimale Entfernung der Schadstoffe aus der Luft oder aus einem Gas.

Das erfindungsgemäße Gerät ist jedoch nicht nur zur Schadstoffbeseitigung aus der Luft geeignet, sondern kann auch als Luftbefeuchter verwendet werden. Es kann demnach als Flüssigkeit reines Wasser mit einem Entspannungsmittel zur besseren Plattenbenetzung verwendet werden.

Der Antrieb mittels des Motors geschieht zweckmäßigerweise derart, daß der Plattenstapel mit ca. 5 bis 10 Umdrehungen pro Minute rotiert.

Ein besonderes Anwendungsgebiet der Erfindung ergibt sich z. B. im Kraftfahrzeug. Es ist bekannt, daß gerade im Kraftfahrzeugverkehr auf Straßen eine erhebliche Belastung der Umwelt durch Auspuffgase eintritt. Die erfindungsgemäße Einrichtung läßt sich hier ganz besonders vorteilhaft in den Kreislauf der in das Wageninnere zu führende Frischluft integrieren. So können Auspuffgase durch geeignete Reaktionsflüssigkeiten weitgehend unschädlich gemacht werden. In diesem Fall muß die erfindungsgemäße Einrichtung auf die konstruktiven Gegebenheiten des Kraftfahrzeugs angepaßt werden, wobei das Funktionsprinzip erhalten bleibt.

Abgesehen vom umfassenden Einsatz des erfindungsgemäßen Gerätes im Haushalt, eignet sich dieses auch als Notgerät bei Smogalarm oder dergleichen.

Die Wartung des erfindungsgemäßen Gerätes läßt sich besonders einfach durchführen. Das Gerät wird mittels dem Schalter 36 ausgeschaltet. Die Herausnahme des Netzsteckers ist nicht erforderlich. Das Gehäuseoberteil 11 wird sodann vom Gehäuseunterteil 12 abgehoben, wobei sich die Gummirollen 27, 28 des Reibradantriebs von den Plattenstapeln 13, 14 abheben. Im unteren Gehäuseteil 12 bleiben dann lediglich die Plattenstapel 13, 14 zurück, die bei Bedarf leicht herausgenommen werden können. So läßt sich das Gehäuseunterteil 12 und damit die Reaktionsflüssigkeit 34 besonders leicht reinigen. Sämtliche Antriebs- und Belüftungsaggregate sind gekapselt und kompakt im Gehäusedeckel untergebracht und brauchen bei der Wartung des Gerätes nicht beachtet zu werden.

Nach Reinigung des Gerätes wird der Deckel lediglich wieder aufgesetzt und die Antriebsrollen 27, 28 kommen mit den Plattenstapeln 13, 14 in Eingriff. Dies stellt nicht zuletzt einen nicht unbeachtlichen Sicherheitsaspekt dar.

**Patentansprüche**

1. Vorrichtung zur Reinigung und/der Befeuchtung von Luft oder Gasen mit in einem Gehäuse (10) angeordneten, zum Teil in einer Flüssigkeit rotierenden und von dieser benetzten Platten zur Aufnahme von Schadstoffen und/oder Abgabe von Flüssigkeit und mit einem kombinierten Antrieb für einen Ventilatorflügel (25) und die zu einem Plattenstapel (13, 14) zusammen gefaßten Platten, mit einem in dem Gehäuse (10) enthaltenen Motor (23), auf dessen Welle (24) der Ventilator (25) sitzt und die zugleich ein Getriebeelement (29) eines untersetzten, unmittelbar auf den Plattenstapel (13, 14) einwirkenden Reibradantriebs (30, 31) trägt, dadurch gekennzeichnet, daß das Gehäuse (10) aus zwei lösbar miteinander verbundenen Gehäuseteilen (11, 12) - einem unteren und einem oberen Gehäuseteil - zusammengesetzt ist, daß die Platten in wenigstens zwei sich überlappenden Plattenstapeln (13, 14) zusammengefasst und in dem unteren Gehäuseteil (12) angeordnet sind, daß das obere Gehäuseteil (11) von dem unteren Gehäuseteil (12) ohne Hilfsmittel abnehmbar ist und daß der Motor (23) abgekapselt im oberen Gehäuseteil angeordnet ist, das auch den Reibradantrieb für die Platten-(13, 14) enthält.

2. Vorrichtung nach Anspruch 1, dadurch gekennzeichnet, daß die Welle des Motors (23) über ein Schneckengetriebe (29-31) od.dgl. auf den Reibradantrieb (27-31) einwirkt und daß der Reibradantrieb (27-31) bei aufeinandergesetzten Gehäuseteilen (11,12) mit den Platten in Eingriff steht.

3. Vorrichtung nach Anspruch 1 oder 2, dadurch gekennzeichnet, daß die Platten bis etwa zur Hälfte in eine Reaktionsflüssigkeit (27) z. B. Wasser mit einem Entspannungsmittel bzw. eine Agenzien-Lösung, wie z. B. Schwefelsäurelösung, Zitronensäurelösung, Natriumdinhydrogenphospat, Kaliumperoxiddisulfat, Dinatriumhydrogenphosphat eingetducht sind.

4. Vorrichtung nach einem oder mehreren der Ansprüche 1 bis 3, dadurch gekennzeichnet, daß die Luft oder das Gas im Gehäuse (10) labyrinthartig an mehrerer, bezüglich des Luft- oder Gasstromes hintereinandergeschalteten Platten (30 - 34) vorbeigeführt wird.

5. Vorrichtung nach Anspruch 4, dadurch gekennzeichnet, daß im Genäuse (10) Trennungswände (36) zur labyrinthartigen Führung des Luft- oder Gasstromes vorgesehen sind.

6. Vorrichtung nach einem der Ansprüche 1 bis 5, dadurch gekennzeichnet, daß die einzelnen Platten (15) im Bereich der Plattenachse (16) stufenförmig (17) ausgebildet sind.

7. Vorrichtung nach einem der Ansprüche 1 bis 6, dadurch gekennzeichnet, daß die einzelnen Platten (15) Bohrungen (19) aufweisen zur Aufnahme von Abstandsnoppen (18).

8. Vorrichtung nach einem der Ansprüche 1 bis 7, dadurch gekennzeichnet, daß die Platten (15) auf der Plattenachse (16) durch eine Nut (20) gegeneinander verdrehsicher gelagert sind und die Abstandseinhaltung der Platten (15) zueinander mittels Noppen (21) geschieht.

**Claims**

1. A device for purifying and/or humidifying air or gases comprising disks located in a housing and partially rotating in a fluid by which they are wetted to pick up contaminants and/or give off fluid, and a combined drive unit for a fan blade (25) and the disks combined to form a disk stack (13, 14), said drive unit comprising a motor (23) located in a housing (10), the shaft (24) of which carries the fan (25) and the gearing element (29) of a friction drive assembly (30, 31) acting directly on the disk stack (13, 14), characterised in that the housing (10) consists of two detachably connected housing sections (11, 12) - an upper and a lower housing section, that the disks are combined into at least two overlapping disk stacks (13, 14) located in the lower housing section (12), that the upper housing section (11) can be detached from the lower housing section (12) without the use of tools, and that the motor (23) is enclosed in the upper housing section, which also contains the friction drive for the disk stacks (13, 14).

2. A device according to Claim 1, characterised in that the shaft of the motor (23) drives the friction drive assembly (27-31) by means of worm gearing (29-31) or the like, and that the friction drive assembly (27-31) is in engagement with the disks when the housing section (11, 12) are placed on top of each other.

3. A device according to Claim 1 or 2, characterised in that approximately half of the disk surface is immersed in a reaction fluid (27) such as water with a surface-active agent or a solution of agents, for instance of sulphuric acid, citric acid, sodium dihydrogen phosphate, potassium peroxide disulphate, disodium hydrogen phosphate etc.

4. A device according to any of Claims 1 to 3, characterised in that the air or the gas in the housing (10) is guided along several plates (30 - 34) arranged in tandem relative to the air or gas flow in the manner of a labyrinth.

5. A device according to Claim 4, characterised in that the housing (10) contains partitions (36) for the labyrinth guidance of the air or gas flow.

6. A device according to any of Claims 1 to 5, characterised in that each disk (15) is stepped (17) in the region of the disk shaft (16).

7. A device according to any of Claims 1 to 6, characterised in that each disk (15) has a bore (19) to receive a spacer nub (18).

8. A device according to any of Claims 1 to 7, characterised in that the disks (15) are secured against twisting on the disk shaft (16) by a groove (20) and that the gaps between individual disks (15) are maintained by nubs (21).

**Revendications**

1. Dispositif d'épuration et/ou d'humidification d'air ou de gaz, avec des disques disposés dans un carter (10), rotatifs, se trouvant partiellement dans un liquide et imprégnés par ce dernier, pour absorber des substances nocives et/ou délivrer du liquide, et avec un dispositif d'entraînement combiné pour une pale de ventilateur (25) et pour les disques rassemblés en une pile de disques (13, 14), comprenant un moteur (23) contenu dans le carter (10) et sur l'arbre (24) duquel est monté le ventilateur (25), l'arbre (24) portant également un élément de transmission (29) d'un entraînement par friction (30, 31) démultiplié agissant directement sur la pile de disques (13, 14), caractérisé en ce que le carter (10) est composé de deux parties de carter (11, 12) -une partie de carter inférieure et une partie de carter supérieure- assemblées l'une à l'autre de manière amovible, en ce que les disques sont groupés en au moins deux piles de disques (13, 14) se chevauchant et sont disposés dans la partie de carter inférieure (12), en ce que la partie de carter supérieure (11) peut être déposée de la partie de carter inférieure (12) sans aucun accessoire, et en ce que le moteur (23) est disposé avec un blindage dans la partie de carter supérieure, laquelle renferme également l'entraînement à friction pour les disques (13, 14).

2. Dispositif selon la revendication 1, caractérisé en ce que l'arbre du moteur (23) agit par l'intermédiaire d'un engrenage à vis sans fin (29-31) ou similaire sur l'entraînement par friction (27-31), et en ce que l'entraînement par friction (27-31) est accouplé avec les disques lorsque les parties de carter (11, 12) sont montées l'une sur l'autre.

3. Dispositif selon la revendication 1 ou 2, caractérisé en ce que les disques sont immergées approximativement jusqu'à la moitié dans un liquide réactif (27), par exemple de l'eau avec un agent de détente ou encore une solution chimique, telle par exemple qu'une solution d'acide sulfurique, une solution d'acide citrique, du dihydrophosphate de sodium, du peroxydisulfate de potassium ou de l'hydrophosphate disodique.

4. Dispositif selon une ou plusieurs des revendications 1 à 3, caractérisé en ce que l'on fait passer l'air ou le gaz dans le carter (10) selon un parcours du genre labyrinthe devant plusieurs disques (30-34) disposés les uns à la suite des autres par rapport au flux d'air ou de gaz.

5. Dispositif selon la revendication 4, caractérisé en ce qu'il est prévu dans le carter (10) des parois séparatrices (36) pour le guidage a la manière d'un labyrinthe du flux d'air ou de gaz.

6. Dispositif selon une des revendications 1 à 5, caractérisé en ce que les différents disques (15) sont conformés en gradins (17) dans la région de l'axe (16) des disques.

7. Dispositif selon une des revendications 1 à 6, caractérisé en ce que les différents disques (15) présentent des alésages (19) pour recevoir des ergots d'écartement.

8. Dispositif selon une des revendications 1 à 7, caractérisé en ce que les disques (15) sont montés sur l'axe (16) des disques sans possibilité de rotation relative par un écrou (20), et le maintien de l'écartement mutuel entre les disques (15) est obtenu à l'aide d'ergots (21).

Fig. 1

Fig. 2